# EUROPEAN PATENT SPECIFICATION

(11) **EP 4 580 859 B1**
(45) Date of publication and mention of the grant of the patent: **27.05.2026**
(21) Application number: 23777028.4
(22) Date of filing: 01.09.2023
(51) Int. Cl.: B29C 49/68, B29C 49/78, B29C 49/64, B29C 49/06

(54) **HEATING SYSTEM FOR HEATING PLASTIC MATERIAL PREFORMS**
HEIZSYSTEM ZUM ERWÄRMEN VON KUNSTSTOFFVORFORMLINGEN
SYSTÈME DE CHAUFFAGE POUR CHAUFFER DES PRÉFORMES EN MATIÈRE PLASTIQUE

(30) Priority: 02.09.2022 IT 202200018042
(43) Date of publication of application: 09.07.2025
(73) Proprietor: S.I.P.A. Società Industrializzazione Progettazione e Automazione S.p.A., 31029 Vittorio Veneto (IT)
(72) Inventor: DA LOZZO, Silvio, 31029 Vittorio Veneto (IT); DE NARDI, Paolo, 31100 Treviso (IT); ZOPPAS, Matteo, 31015 Conegliano (IT)
(74) Representative: Celona, Antonio
(86) International application number: PCT/IB2023/058669
(87) International publication number: WO 2024/047604

(56) References cited:
- EP-B1- 2 720 842
- JP-B2- 5 674 673
- US-A- 4 342 895
- US-A1- 2011 294 085
- US-A1- 2021 187 815
- US-A1- 2022 024 109

## Description

### Field of the invention

The present invention relates to a heating system for heating plastic material preforms, preferably to be arranged upstream of a blow molding or stretch-blow molding machine, the heating system being adapted to be crossed by a plurality of preforms advancing along a transport line. The invention also relates to a furnace comprising the aforesaid heating system, a blow molding plant for blowing containers comprising said furnace, and a related process for heating the preforms by means of said heating system.

### Background art

**It** is known that the blowing or stretch-blowing process must be preceded by a temperature conditioning step of the preforms, carried out in a furnace, in which the preforms are heated to a predefined temperature for the blowing by means of specific heating modules that use a plurality of heating elements, e.g. infrared lamps. The object of this heating of the preforms prior to the blow molding or stretch-blow molding step is to bring the material of the preform to an appropriate temperature to obtain a quality molded container.

Generally, the heating modules are arranged symmetrically in two benches, defining two tunnels connected by a curved stretch. The heating elements in each heating module are arranged along a plane substantially parallel to the plane containing the axes of the preforms advancing along the respective bench. The preforms, moved by a transfer chain provided with chucks, cross the heating modules of the two tunnels.

During the passage of the preforms in these heating modules, the neck of the preforms must remain substantially cold, i.e., at a temperature lower than the softening temperature so that the subsequent blowing operations do not deform it. It is also known that the heating of the body of the preforms is achieved due to the combined effect of:
- thermal radiation that penetrates into the thickness of the body of the preform (convection);
- contact with the ambient air heated inside the furnace (conduction);
- diffusion of the heat by conduction into the wall of the preform (stabilization/temperature inversion).

It also is important to ventilate the inside of the heating module and the outer surface of the preforms therein with a preset air flow so that the material of the outer surface of the preform is not brought to a too high temperature, which would cause it to crystalize while waiting for the material arranged inside the preform to reach the blowing temperature. This ventilation allows the ambient temperature of the heating module to be kept at a desirable level, eliminating the excessive heat, for example due to the infrared rays not captured by the preforms, and the temperature of the preform skin to be moderated. Such a desirable level of the inner temperature of the heating module is that one that allows the energy performance thereof to be optimized. It is well known that this energy performance is a function of the thickness of the preforms. The ventilation flow rate must be sufficient to absolve this function, and it is desirable for it to be well-distributed in the heating module so that the whole surface of the preform wall, which must be heated, is treated homogeneously.

Disadvantageously, the control of the temperature of the preforms immediately upstream of the molding machine is performed by means of a single temperature sensor mounted on the last heating module of the furnace. The possible feedback control, based on this single measuring point, for modulating the power of the heating elements of this last heating module leads to a non-optimal temperature profile on the whole preform, in particular, at the margins of the preform.

US2021187815A1, EP2720842B1 , US2011294085A1, and US2022024109A1 disclose relevant heating systems and EP2720842B1 essentially disclose a heating system in accordance with the preamble of claim 1.

A need is felt to provide a heating system capable of overcoming the stated drawback. In particular there is a need for the feedback speed to be maximized while minimizing the feedback power regulating times of the heating elements. Further on there is a need to avoid the measurement from being taken on the preform during the exposure thereof to the radiation of the heating elements. Further on there is a need for allowing any temperature sensor to be used, for example, any pyrometer or thermal camera, without the need to use particular materials which do not absorb radiations at the emission wavelengths of the heating elements.

### Summary of the invention

It is an object of the present invention to provide a heating system in accordance with claim 1.

It is another object of the present invention to provide a furnace comprising a plurality of heating systems, in which it is provided for at least one of said heating systems to be made according to the solution of the invention so as to allow the power of the heating elements thereof and/or the power of the heating elements of further heating systems, also of the known type, arranged upstream of the heating system of the invention, to be better modulated.

It is a further object of the present invention to provide a related preform heating process which uses the aforesaid heating system.

The present invention achieves such an object, and others that will be apparent in light of the present description, by means of a heating system for heating plastic material preforms upstream of a blow molding or stretch-blow molding machine, the system comprising a heating module adapted to be crossed by a plurality of preforms advancing along a transport line,
wherein the heating module is provided with a plurality of heating elements arranged along a plane substantially parallel to a plane containing the axes of the preforms adapted to cross said heating module,
wherein the heating module comprises
a first heating zone, proximal to a support area of the neck of the preforms and comprising at least one first heating element of said plurality of heating elements, and at least one second heating zone, arranged adjacent to said first heating zone and at a passage zone of the tubular body of the preforms and comprising at least one second heating element of said plurality of heating elements,
wherein the system further comprises
at least one first temperature sensor arranged externally to the heating module and at said first heating zone,
and at least one second temperature sensor arranged externally to the heating module and at said at least one second heating zone,
wherein an electronic control device is provided, adapted to receive the temperature data detected both by said at least one first temperature sensor and said at least one second temperature sensor, compare said temperature data with predefined target temperatures of said first heating zone and said second heating zone, and act in feedback by regulating the power of said at least one first heating element and said at least one second heating element;
and wherein both said at least one first temperature sensor and said at least one second temperature sensor are arranged immediately downstream of the heating module.

The second heating zone, adjacent to the first heating zone, is arranged below the first heating zone in the case where the transport line is configured to advance the preforms with the opening of the neck facing upwards, or it is arranged above the first heating zone in the case where the transport line is configured to advance the preforms with the opening of the neck facing downwards.

Another aspect of the invention relates to a furnace for heating plastic material preforms adapted to be positioned upstream of a blow molding or stretch-blow molding machine, the furnace comprising a plurality of heating systems comprising a respective heating module adapted to be crossed by said plurality of preforms, and arranged in at least one bench,
wherein each heating module is provided with a plurality of respective heating elements arranged along a plane substantially parallel to the plane containing the axes of the preforms adapted to advance along the at least one bench,
wherein it is provided for at least one heating system of said heating systems to be made according to the solution of the invention,
and wherein the electronic control device of said at least one heating system of the invention is adapted to receive the temperature data detected both by the respective at least one first temperature sensor and the respective at least one second temperature sensor, compare said temperature data with predefined target temperatures of said first heating zone and said second heating zone of the respective heating module, and act in feedback by regulating the power of said at least one first heating element and said at least one second heating element of said respective heating module and/or act in feedback by regulating the power of the plurality of heating elements of one or more of the further heating systems of the furnace arranged upstream of said at least one heating system made according to the invention.

A further aspect of the invention relates to a blow molding plant for blow molding plastic material containers comprising in sequence
- the aforesaid furnace,
- and a blow molding or stretch-blow molding machine.

Finally, a last aspect of the present invention relates to a process for heating plastic material preforms by means of the heating system of the invention, wherein there are provided
- a detection of the temperature of the preform at said first heating zone by means of said at least one first temperature sensor,
- and a detection of the temperature of the preform at said at least one second heating zone by means of said at least one second temperature sensor,
and wherein the temperature data detected by both said at least one first temperature sensor and said at least one second temperature sensor are received by the electronic control device which compares them with predefined target temperatures of said first heating zone and said second heating zone to act in feedback by regulating the power of said at least one first heating element and said at least one second heating element.

Advantageously, the heating system of the invention has a high flexibility, allowing, based on the different shapes of the preform (for example, preforms with different thickness zones along the longitudinal axis thereof) or based on the length of the preform, the two or more heating zones, in which a determined heat gradient on the preform is desired, to be accurately controlled. This allows a desired constant distribution of the plastic on the container to be obtained while having thermal "disturbances" determined by the different temperature of the air and by the "edge" effect which can affect the thermal dynamics/thermal profile of the preform.

Further features and advantages of the invention will become more apparent in the light of the detailed description of exemplary, but non-exclusive embodiments thereof.

The dependent claims describe particular embodiments of the invention.

### Brief description of the drawings

In the description of the invention, reference is made to the accompanying drawings, which are provided by way of non-limiting example, in which:
Figure 1 shows a diagrammatic layout of a heating module bench of a furnace according to the invention;
Figure 2 shows a diagrammatic sectional view of a first embodiment of a heating system according to the invention;
Figure 3 shows a diagrammatic sectional view of a first variant of said first embodiment;
Figure 4 shows a diagrammatic sectional view of a second variant of said first embodiment;
Figure 5 shows a diagrammatic sectional view of a second embodiment of a heating system according to the invention;
Figure 6 shows a diagrammatic sectional view of a first variant of said second embodiment;
Figure 7 shows a diagrammatic sectional view of a second variant of said second embodiment;
Figure 8 shows a diagrammatic layout of two heating module benches of a furnace according to the invention.

The same reference numerals and letters in the figures identify the same elements or components.

### Description of embodiments of the invention

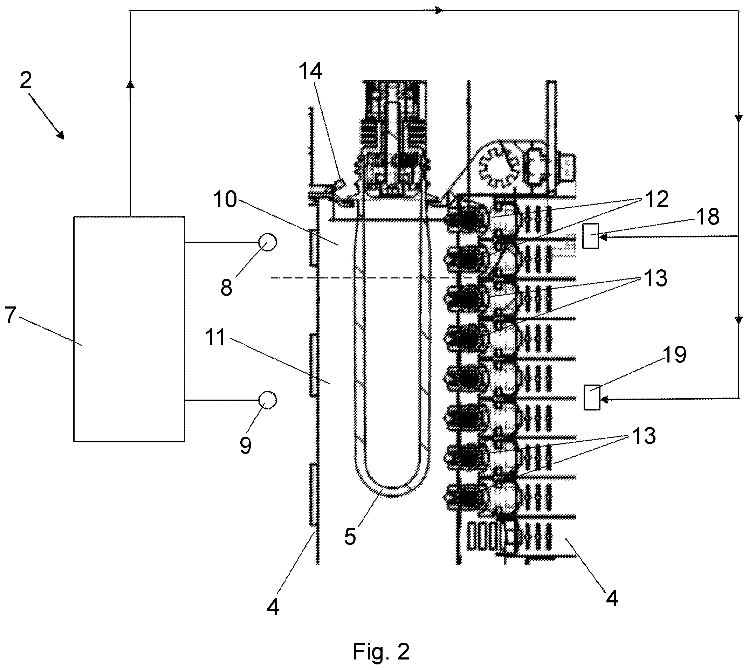

With reference to Figures 2-7, embodiments of a heating system 2 of the present invention for heating preforms 5, at the inlet of a blow molding or stretch-blow molding machine 3, are shown.

The preforms to be heated are made of plastic material, e.g., PET, PP, PLA, PVC, but the system of the invention can also be used to heat preforms made of different plastic material, or a combination of some of these materials.

In all embodiments of the invention, the heating system 2 comprises a heating module 4 adapted to be crossed by a plurality of preforms 5 advancing along a transport line 14.

Said heating module 4 is provided with a plurality of heating elements 12, 13 arranged along a plane substantially parallel to a plane containing the axes of the preforms 5 crossing the heating module.

In a first embodiment of the heating system of the invention, the heating module 4 comprises (Figures 2-4):
- a first heating zone 10, proximal to a support area of the neck of the preforms, and comprising at least one first heating element 12,
- and a second heating zone 11, for example, a single second heating zone, arranged below the first heating zone 10 and at a passage zone of the tubular body of the preforms, and comprising at least one second heating element 13.

In Figures 2-4, the transport line is configured to advance the preforms with the neck opening facing upwards. Alternatively, it is not excluded for the second heating zone 11 to be arranged above the first heating zone 10 if the transport line is configured to advance the preforms with the opening of the neck facing downwards.

In this first embodiment, the heating system 2 further comprises:
- at least one first temperature sensor 8 arranged externally to the heating module 4 and at the first heating zone 10,
- at least one second temperature sensor 9 arranged externally to the heating module 4 and at the second heating zone 11,
- and an electronic control device 7 for receiving the temperature data detected both by said at least one first temperature sensor 8 and said at least one second temperature sensor 9, comparing said temperature data with predefined target temperatures of the first heating zone 10 and the second heating zone 11, and acting in feedback by regulating the power of said at least one first heating element 12 and said at least one second heating element 13.

In the variant in Figure 2, the heating system 2 comprises:
- only one first temperature sensor 8 at the first heating zone 10,
- and only one second temperature sensor 9 at the second heating zone 11.

In this variant, the electronic control device 7 receives the temperature data detected by said first temperature sensor 8 and said second temperature sensor 9, compares said temperature data with predefined target temperatures of the first heating zone 10 and the second heating zone 11, and acts in feedback by regulating the power of the first heating elements 12 by means of the power regulator 18, and the power of the second heating elements 13 by means of the power regulator 19. Alternatively, one power regulator 18 can be provided for each heating element 12 and one power regulator 19 can be provided for each second heating element 13.

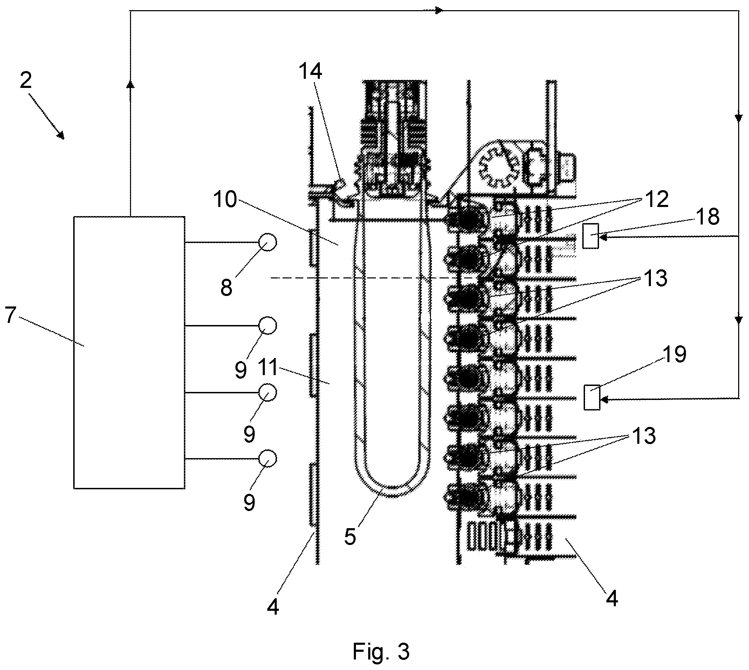

In the variant in Figure 3, the heating system 2 comprises:
- only one first temperature sensor 8 at the first heating zone 10,
- and three second temperature sensors 9 at the second heating zone 11. Alternatively, a single first temperature sensor 8 and two or more second temperature sensors 9 can be provided; or two or more first temperature sensors 8 and a single second temperature sensor 9; or two or more first temperature sensors 8 and two or more second temperature sensors 9.

In this variant, the electronic control device 7 receives the temperature data detected by the single first temperature sensor 8, or by the first temperature sensors 8, and by the second temperature sensors 9, or by the single temperature sensor 9, compares said temperature data with predefined target temperatures of the first heating zone 10 and the second heating zone 11, and acts in feedback by regulating the power of the first heating elements 12 by means of the power regulator 18, and the power of the second heating elements 13 by means of the power regulator 19. Alternatively, also in this case, one power regulator 18 can be provided for each heating element 12 and one power regulator 19 can be provided for each second heating element 13.

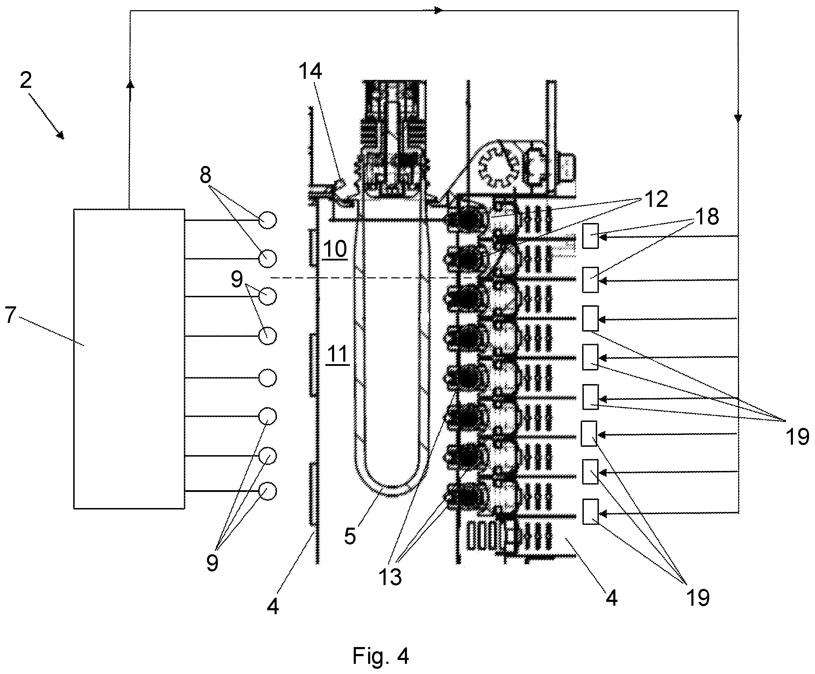

In the variant in Figure 4, the heating system 2 comprises a respective first temperature sensor 8 for each first heating element 12 and a respective second temperature sensor 9 for each second heating element 13.

In this variant, the electronic control device 7 receives the temperature data detected by the first temperature sensors 8 and the second temperature sensors 9, compares said temperature data with predefined target temperatures of the first heating zone 10 and the second heating zone 11, and acts in feedback by regulating the power of the first heating elements 12 by means of the respective power regulators 18, and the power of the second heating elements 13 by means of the respective power regulators 19. Alternatively, a single power regulator can be provided for all the first heating elements 12 and a single power regulator 19 can be provided for all the second heating elements 13.

In all the variants in Figures 2-4, only by mere way of non-limiting example, the first heating zone 10, proximal to a support area of the neck of the preforms, comprises two heating elements 12; while the second heating zone 11, at a passage zone of the tubular body of the preforms, comprises six heating elements 13. It is possible for the heating elements 12 to be less than two or more than two, and for the heating elements 13 to be less than six or more than six.

The temperature sensors 8 and 9 are arranged immediately downstream of the heating module 4.

No components are provided between the outlet section of the heating module 4 and the temperature sensors.

For example, the temperature sensors 8, 9 are arranged also upstream of the transfer wheel (not shown), or of any other transfer means, which transfers the preforms from the heating module 4 to the blow molding or stretch-blow molding machine 3.

This configuration allows the feedback speed to be maximized while minimizing the feedback power regulating times of the heating elements 12, 13. Further, this configuration increases the quality of the measurement both with respect to solutions with temperature sensors integrated in a wall of the heating module and facing the inside of the module, with which a false temperature measurement is possible, and with respect to solutions with the temperature sensors arranged further downstream with respect to the heating module, in particular arranged further downstream of the last heating module, which result in a lengthening of the path of the preforms between the furnace and the molding machine and an increase in the transit time between the preform thermal conditioning and the container molding.

Further, the temperature sensors 8 and 9 face the outside of the heating module 4 to avoid the measurement from being taken on the preform during the exposure thereof to the radiation of the heating elements 12, 13.

This configuration allows any temperature sensor to be used, for example, any pyrometer or thermal camera, without the need to use particular materials which do not absorb radiations at the emission wavelengths of the heating elements.

Preferably, the outlet section of the heating module 4 is provided with a shield (not shown) to avoid the presence of residual thermal radiations of the heating module from altering the measurement of the temperature and accordingly, causing errors in setting the heating profile.

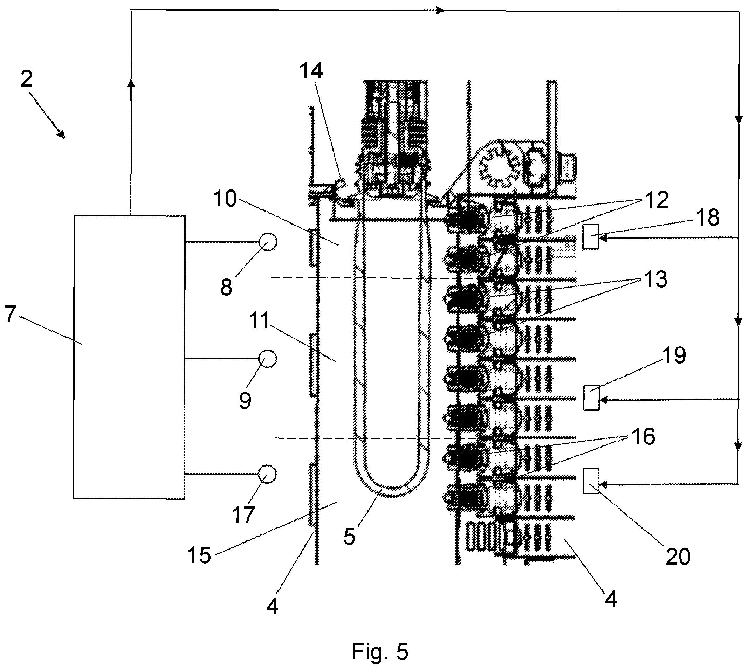

In a second embodiment of the heating system of the invention, the heating module 4 comprises (Figures 5-7):
- a first heating zone 10, proximal to a support area of the neck of the preforms, and comprising at least one first heating element 12,
- a second heating zone 11, arranged below the first heating zone 10 and at a passage zone of the tubular body of the preforms, and comprising at least one second heating element 13;
- and a third heating zone 15, arranged below said second heating zone 11 and at a passage zone of the bottom of the preforms, and comprising at least one third heating element 16.

In Figures 5-7, the transport line is configured to advance the preforms with the opening of the neck facing upwards. Alternatively, it is not excluded for the second heating zone 11 to be arranged above the first heating zone 10 and the third heating zone 15 to be arranged above said second heating zone 11 if the transport line is configured to advance the preforms with the opening of the neck facing downwards.

In this second embodiment, the heating system 2 further comprises:
- at least one first temperature sensor 8 arranged externally to the heating module 4 and at the first heating zone 10,
- at least one second temperature sensor 9 arranged externally to the heating module 4 and at the second heating zone 11,
- at least one third temperature sensor 17 arranged externally to the heating module 4 and at the third heating zone 15,
- and an electronic control device 7 for receiving the temperature data detected by said at least one first temperature sensor 8, said at least one second temperature sensor 9, and said at least one third temperature sensor 17, comparing said temperature data with predefined target temperatures of the first heating zone 10, second heating zone 11, and third heating zone, respectively, and acting in feedback by regulating the power of said at least one first heating element 12, said at least one second heating element 13, and said at least one third heating element 16.

In the variant in Figure 5, the heating system 2 comprises:
- only one first temperature sensor 8 at the first heating zone 10,
- only one second temperature sensor 9 at the second heating zone 11,
- and only one third temperature sensor 17 at the third heating zone 15.

In this variant, the electronic control device 7 receives the temperature data detected by said first temperature sensor 8, said second temperature sensor 9, and said third temperature sensor 17, it compares them with predefined target temperatures of the first heating zone 10, second heating zone 11, and third heating zone 15, respectively, and acts in feedback by regulating the power of the first heating elements 12 by means of the power regulator 18, the power of the second heating elements 13 by means of the power regulator 19, and the power of the third heating elements 16 by means of the power regulator 20. Alternatively, one power regulator 18 for each heating element 12, one power regulator 19 for each second heating element 13, and one power regulator 20 for each third heating element 16 can be provided.

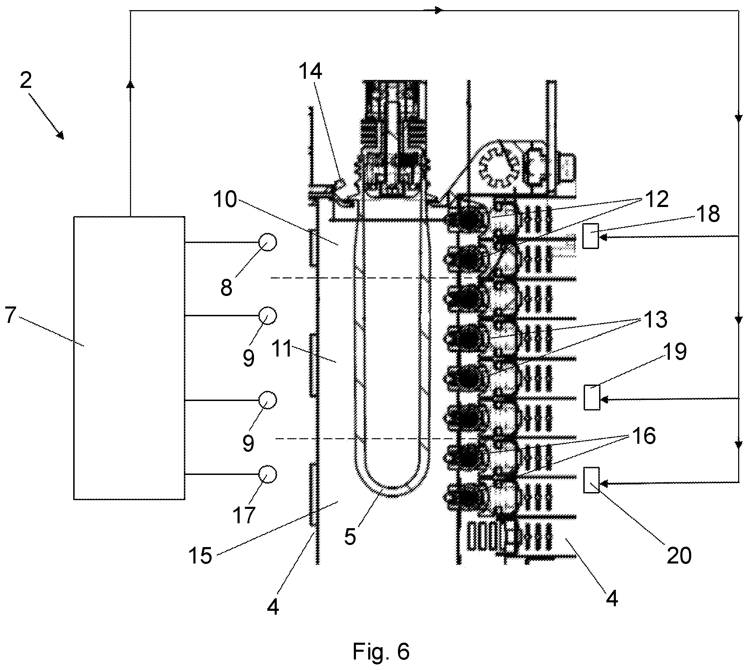

In the variant in Figure 6, the heating system 2 comprises:
- only one first temperature sensor 8 at the first heating zone 10,
- two second temperature sensors 9 at the second heating zone 11,
- and only one third temperature sensor 17 at the third heating zone 15. Alternatively, there can be provided
- only one first temperature sensor 8, three or more second temperature sensors 9, and only one third temperature sensor 17;
- or two or more first temperature sensors 8, only one second temperature sensor 9, and only one third temperature sensor 17;
- or only one first temperature sensor 8, only one second temperature sensor 9, and two or more third temperature sensors 17;
- or two or more first temperature sensors 8, two or more second temperature sensors 9, and only one third temperature sensor 17;
- or two or more first temperature sensors 8, only one second temperature sensor 9, and two or more third temperature sensors 17;
- or only one first temperature sensor 8, two or more second temperature sensors 9, and two or more third temperature sensors 17;
- or two or more first temperature sensors 8, two or more second temperature sensors 9, and two or more third temperature sensors 17.

In this variant, the electronic control device 7 receives the temperature data detected by the single first temperature sensor 8, or by the first temperature sensors 8, by the second temperature sensors 9, or by the single temperature sensor 9, and by the third temperature sensors 17, or by the single temperature sensor 17, compares said temperature data with predefined target temperatures of the first heating zone 10, the second heating zone 11, and the third heating zone 15, respectively, and acts in feedback by regulating the power of the first heating elements 12 by means of the power regulator 18, the power of the second heating elements 13 by means of the power regulator 19, and the power of the third heating elements 16 by means of the power regulator 20. Alternatively, one power regulator 18 for each heating element 12, one power regulator 19 for each second heating element 13, and one power regulator 20 for each third heating element 16 can be provided.

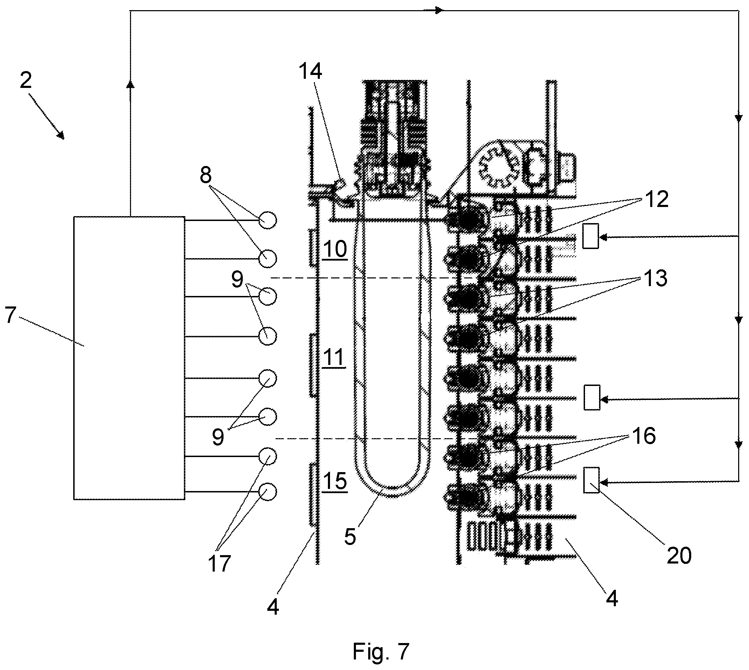

In the variant in Figure 7, the heating system 2 comprises a respective first temperature sensor 8 for each first heating element 12, a respective second temperature sensor 9 for each second heating element 13, and a respective third temperature sensor 17 for each third heating element 16.

In this variant, the electronic control device 7 receives the temperature data detected by the first temperature sensors 8, second temperature sensors 9, and third temperature sensors 17, compares said temperature data with predefined target temperatures of the first heating zone 10, second heating zone 11, and third heating zone 15, respectively, and acts in feedback by regulating the power of the first heating elements 12 by means of respective power regulators 18, the power of the second heating elements 13 by means of respective power regulators 19, and the power of the third heating elements 16 by means of respective power regulators 20. Alternatively, as shown in Figure 7, a single power regulator can be provided for all the first heating elements 12, a single power regulator 19 can be provided for all the second heating elements 13, and a single power regulator 20 can be provided for all the third heating elements 16.

In all the variants in Figures 5-7, only by mere way of non-limiting example, the first heating zone 10, proximal to a support area of the neck of the preforms, comprises two heating elements 12; the second heating zone 11, at a passage zone of the tubular body of the preforms, comprises four heating elements 13; and the third heating zone 15, at a passage zone of the bottom of the preforms, comprises two third heating elements 16. It is possible for the heating elements 12 to be less than two or more than two, the heating elements 13 to be less than four or more than four, and the heating elements 16 to be less than two or more than two.

Advantageously, as in the first embodiment of the invention, the temperature sensors 8, 9 and 17 are arranged immediately downstream of the heating module 4.

In particular, therefore, no components are provided between the outlet section of the heating module 4 and the temperature sensors.

For example, the temperature sensors 8, 9, 17 are arranged also upstream of the transfer wheel, or of any other transfer means, which transfers the preforms from the heating module 4 to the blow molding or stretch-blow molding machine 3. Further, the temperature sensors 8, 9 and 17 face the outside of the heating module 4 to avoid the measurement from being taken on the preform during the exposure thereof to the radiation of the heating elements 12, 13 and 16. Preferably, the outlet section of the heating module 4 is provided with a shield (not shown) to avoid the presence of residual thermal radiations of the heating module from altering the measurement of the temperature and, accordingly, causing errors in setting the heating profile.

In all the embodiments of the invention, the heating elements 12, 13, 16 can be infrared lamps arranged along a first plane substantially parallel to said plane containing the axes of the preforms adapted to cross said heating module. Alternatively to the infrared lamps, LED lamps or laser lamps or NIR lamps can be used, or other suitable heating element.

Similarly, the temperature sensors 8, 9 17 are arranged along a second plane substantially parallel to the plane containing the axes of the preforms, adapted to cross said heating module, and to said first plane along which the heating elements 12, 13, 16 are arranged.

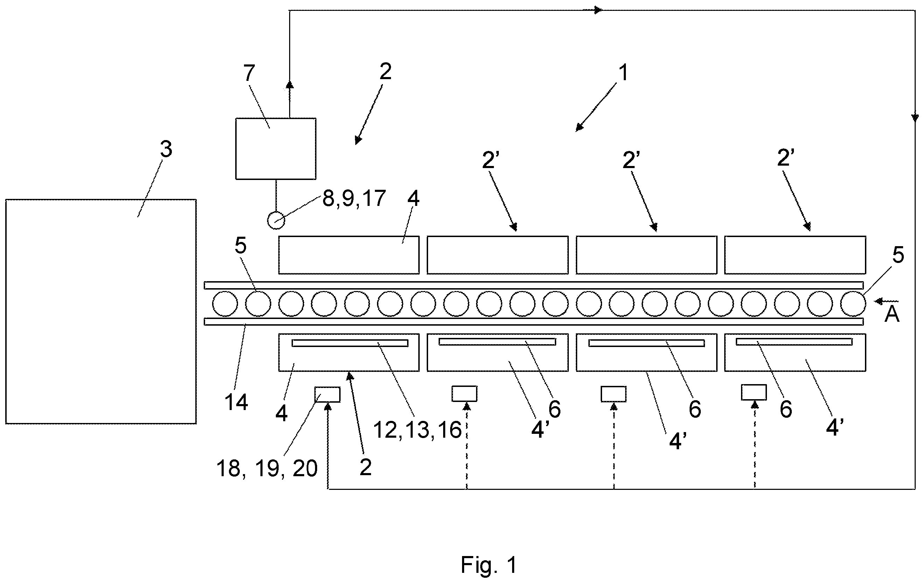

A further aspect of the present invention relates to a furnace 1 for heating plastic material preforms, diagrammatically shown in Figure 1, arranged upstream of a blow molding or stretch-blow molding machine 3.

Such a furnace 1 comprises a plurality of heating systems 2, 2' comprising a respective heating module 4, 4', adapted to be crossed by the preforms 5 advancing along a transport line 14, and arranged in at least one bench.

At least one heating system, indicated by reference numeral 2, is made according to the invention, according to one of the variants described above.

The remaining heating systems are of the conventional type, indicated by reference numeral 2'. Each heating module 4' is provided with a plurality of heating elements 6 arranged along a plane substantially parallel to the plane containing the axes of the preforms 5 advancing along the bench.

Such heating modules 4' can be made according to any one of the solutions known from the prior art.

Advantageously, the electronic control device 7 of the at least one heating system 2 according to the invention is adapted to
- receive the temperature data detected by both the respective at least one first temperature sensor 8 and the respective at least one second temperature sensor 9, and possibly also by the at least one third temperature sensor 17;
- compare said temperature data with predefined target temperatures of said first heating zone 10 and said second heating zone 11, and possibly also of said third heating zone 15, of the respective heating module 4,
- and act in feedback by regulating the power of said at least one first heating element 12 and said at least one second heating element 13, and possibly also said at least one third heating element 16, of said respective heating module 4 and/or act in feedback by regulating the power of the plurality of heating elements 6 of the remaining heating systems 2' of furnace 1 arranged upstream of said at least one heating system 2 according to the invention.

The example in Figure 1 shows a furnace 1 with a single linear bench of heating systems 2, 2'. Arrow A indicates the advancement direction of the preforms 5 crossing the respective heating modules 4, 4'.

In this non-limiting example, the heating system 2 according to the invention is the last system of the bench, placed immediately upstream of the molding machine 3, which can be a linear type machine or a rotating machine.

Alternatively, the heating system 2 according to the invention can be arranged in an intermediate position within the bench.

In a configuration (not shown) of a furnace with two benches connected by a connection stretch, for example a curved or serpentine stretch, a heating system according to the invention can be arranged immediately upstream of the stretch-blow molding machine 3 and immediately downstream of the second bench of heating systems, and/or in an intermediate position into the second bench, and/or in an intermediate position into the first bench.

For increased control of the temperature of the preforms along the transport line, a first detecting device for detecting the temperature of the preform can be arranged at the inlet of the first bench, and a second detecting device for detecting the temperature of the preform can be arranged at said connection segment.

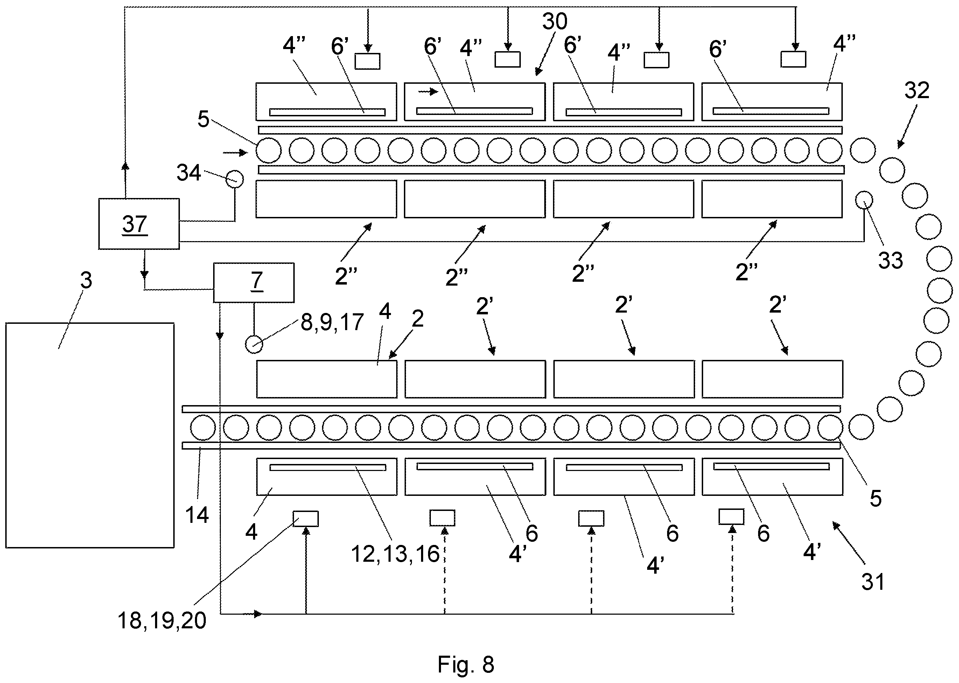

More in detail, as shown diagrammatically in Figure 8, the furnace 1 is provided with two benches 30, 31 connected by a connection stretch 32.

The second bench 31, proximal to the blow molding or stretch-blow molding machine 3, comprises a plurality of heating systems 2, 2' comprising a respective heating module 4, 4', adapted to be crossed by the preforms 5 advancing along the transport line 14.

At least one heating system, indicated by reference numeral 2, is made according to the invention, according to one of the variants described above.

The remaining heating systems are of the conventional type, indicated by reference numeral 2'. Each heating module 4' is provided with a plurality of heating elements 6 arranged along a plane substantially parallel to the plane containing the axes of the preforms 5 advancing along the second bench 31.

Such heating modules 4' can be made according to any one of the solutions known from the prior art.

Preferably, the heating system 2 according to the invention is the last system of the second bench 31, the closest to the molding machine 3.

The first bench 30, distal from the blow molding or stretch-blow molding machine 3, comprises a plurality of heating systems 2" comprising a respective heating module 4", of conventional type.

Each heating module 4" is provided with a plurality of heating elements 6' arranged along a plane substantially parallel to the plane containing the axes of the preforms 5 advancing along the first bench 30.

Such heating modules 4" can be made according to any one of the solutions known from the prior art.

Advantageously, at least one temperature sensor 33, preferably a single temperature sensor 33, is arranged at said connection stretch 32, preferably immediately downstream of the first bench 30.

A further electronic control device 37 is adapted to receive the temperature data detected by said at least one temperature sensor 33, compare said temperature data with a predefined target temperature of the preform at the outlet of the first bench 30, and act in feedback by regulating the power of the heating elements 6' of the heating modules 4" by means of respective power regulators.

Preferably, at least one further temperature sensor 34, optionally a single further temperature sensor 34, is arranged at the inlet of the first bench 30.

Said further electronic control device 37 is adapted also to receive the temperature data detected by said at least one further temperature sensor 34, compare said temperature data with a predefined target temperature of the preform at the inlet of the first bench 30, to optimize the power of the heating elements 6' of the heating modules 4" before the preform crosses it.

In a preferred variant, said further electronic control device 37 cooperates with the electronic control device 7, sending to the latter the temperature data detected by said at least one temperature sensor 33 to optimize the power of the heating elements 12, 13, 16 and 6 of the heating modules 4, 4' of the second bench 31 before the preform crosses said heating modules.

A further aspect of the invention relates to a process for heating plastic material preforms by means of a heating system according to the invention, wherein the following is provided
- a detection of the temperature of the preform at said first heating zone 10 by means of said at least one first temperature sensor 8,
- a detection of the temperature of the preform at said at least one second heating zone 11 by means of said at least one second temperature sensor 9,
- and a possible detection of the temperature of the preform at said at least one third heating zone 15 by means of said at least one third temperature sensor 17,
and wherein the temperature data detected both by said at least one first temperature sensor 8 and said at least one second temperature sensor 9, and possibly also by said at least one third temperature sensor 17, are received by the electronic control device 7 that compares them with predefined target temperatures of said first heating zone 10 and said second heating zone11, and of the possible third heating zone 15, to act in feedback by regulating the power of said at least one first heating element 12 and said at least one second heating element 13, and possibly of said at least one third heating element 16.

A further aspect of the invention relates to a process for heating plastic material preforms by means of the furnace diagrammatically shown in Figure 8, wherein there is further provided a detection of the temperature of the preform at the connection stretch 32, preferably immediately downstream of the first bench 30, by means of said at least one temperature sensor 33; and wherein the temperature data detected by said at least one temperature sensor 33 are received by the further electronic control device 37 which compares said temperature data with one predefined target temperature of the preform surface at the outlet of the first bench 30 to act in feedback by regulating the power of the heating elements 6' of one or more heating modules 4" by means of special power regulators.

Preferably, said further electronic control device 37 cooperates with the electronic control device 7 by sending to the latter the temperature data detected by said at least one temperature sensor 33 so that said electronic control device 7 optimizes, in the second bench 31, the power of the heating element 12, 13 and 16 of the respective heating module 4 of the heating system 2 and/or the power of the plurality of heating elements 6 of one or more of the further heating systems 2'. Finally, a preferred option is detecting the temperature of the surface of the preform at the inlet of the first bench 30 by means of said at least one further temperature sensor 34.

In this case, the temperature data detected by said at least one further temperature sensor 34 are received by the further electronic control device 37 which compares said temperature data with a predefined target temperature of the surface of the preform at the inlet of the first bench 30 to optimize the power of the heating elements 6' of the heating modules 4".

## Claims

1. A heating system (2) for heating plastic material preforms upstream of a blow molding or stretch-blow molding machine (3), the system comprising a heating module (4) adapted to be crossed by a plurality of preforms (5) advancing along a transport line (14),
wherein the heating module (4) is provided with a plurality of heating elements (12, 13) arranged along a plane substantially parallel to a plane containing the axes of the preforms adapted to cross said heating module,
wherein the heating module (4) comprises
a first heating zone (10), proximal to a support area of the neck of the preforms, and comprising at least one first heating element (12) of said plurality of heating elements,
and at least one second heating zone (11), arranged adjacent to said first heating zone (10) and at a passage zone of the tubular body of the preforms, and comprising at least one second heating element (13) of said plurality of heating elements,
wherein the heating system (2) further comprises
at least one first temperature sensor (8) arranged externally to the heating module (4) and at said first heating zone,
and at least one second temperature sensor (9) arranged externally to the heating module (4) and at said at least one second heating zone,
wherein an electronic control device (7) is provided, adapted to receive the temperature data detected both by said at least one first temperature sensor (8) and said at least one second temperature sensor (9), compare said temperature data with predefined target temperatures of said first heating zone (10) and said at least one second heating zone (11), and act in feedback by regulating the power of said at least one first heating element (12) and said at least one second heating element (13);
the heating system being **characterized in that**
both said at least one first temperature sensor (8) and said at least one second temperature sensor (9) are arranged immediately downstream of the heating module (4), such that no components are provided between the outlet section of the heating module (4) and the temperature sensors, and the sensors (8, 9) are facing the outside of said heating module (4) to avoid the measurement from being taken on the preform during the exposure thereof to the radiation of the heating elements (12, 13).

2. A system according to claim 1, wherein there are provided a first temperature sensor (8) for each first heating element (12) and a second temperature sensor (9) for each second heating element (13).

3. A system according to claim 1, further comprising
- at least one third heating zone (15), arranged adjacent to said at least one second heating zone (11) and at a passage zone of the bottom of the preforms, and comprising at least one third heating element (16) of said plurality of heating elements;
- and at least one third temperature sensor (17) arranged externally to the heating module (4) and at said third heating zone,
and wherein said electronic control device (7) is adapted to also receive the temperature data detected by said at least one third temperature sensor (17), compare them with at least one predefined target temperature of said third heating zone (15), and act in feedback by regulating the power of said at least one third heating element (16).

4. A system according to claim 3, wherein there are provided a first temperature sensor (8) for each first heating element (12), a second temperature sensor (9) for each second heating element (13), and a third temperature sensor (17) for each third heating element (16).

5. A system according to any one of the preceding claims, wherein said plurality of heating elements (12, 13) comprises infrared lamps or **NIR** lamps or laser lamps, arranged along a plane substantially parallel to said plane containing the axes of the preforms adapted to cross said heating module.

6. A system according to claim 3, wherein said at least one third temperature sensor (17) is arranged immediately downstream of the heating module (4), and preferably facing the outside of said heating module (4).

7. A furnace (1) for heating plastic material preforms, adapted to be positioned upstream of a blow molding or stretch-blow molding machine (3), the furnace (1) comprising a plurality of heating systems (2, 2') comprising a respective heating module (4, 4'), adapted to be crossed by said plurality of preforms (5), and arranged in at least one bench,
wherein each heating module (4, 4') is provided with a plurality of respective heating elements (12, 13, 16) arranged along a plane substantially parallel to the plane containing the axes of the preforms (5) adapted to advance along the at least one bench (31),
wherein it is provided for at least one heating system (2) of said heating systems (2, 2') to be made according to any one of the preceding claims,
and wherein the electronic control device (7) of said at least one heating system (2) is adapted to
receive the temperature data detected by both the respective at least one first temperature sensor (8) and the respective at least one second temperature sensor (9), compare said temperature data with predefined target temperatures of said first heating zone (10) and said second heating zone (11) of the respective heating module (4),
and act in feedback by regulating the power of said at least one first heating element (12) and said at least one second heating element (13) of said respective heating module (4) and/or act in feedback by regulating the power of the plurality of heating elements (6) of one or more of the further heating systems (2') of the furnace (1) arranged upstream of said at least one heating system (2) made according to any one of the preceding claims.

8. A furnace according to claim 7, wherein said plurality of heating systems (2, 2'), comprising a respective heating module (4, 4'), is arranged in a bench (31);
wherein there is provided a further bench (30), arranged upstream of the bench (31) and provided with a plurality of heating systems (2"), comprising a respective heating module (4"), and connected to the bench (31) by means of a connection stretch (32);
wherein each heating module (4") is provided with a plurality of heating elements (6') arranged along a plane substantially parallel to the plane containing the axes of the preforms (5) advancing along said further bench (30);
wherein at least one further first temperature sensor (33), preferably a single further first temperature sensor (33), is arranged at said connection stretch (32), preferably immediately downstream of the further bench (30);
and wherein a further electronic control device (37) is adapted to receive the temperature data detected by said at least one further first temperature sensor (33), compare said temperature data with a predefined target temperature of the surface of the preform at the outlet of said further bench (30), and act in feedback by regulating the power of the heating elements (6') of one or more of the heating modules (4").

9. A furnace according to claim 8, wherein said further electronic control device (37) is adapted to cooperate with the electronic control device (7) by sending to this latter the temperature data detected by said at least one further first temperature sensor (33), so that said electronic control device (7) can optimize the power of said at least one first heating element (12) and said at least one second heating element (13) of said respective heating module (4) and/or the power of the plurality of the heating elements (6) of one or more of the further heating systems (2') of the bench (31).

10. A furnace according to claim 8 or 9, wherein there is provided at least one further second temperature sensor (34), preferably a single further second temperature sensor (34), arranged at the inlet of the further bench (30);
and wherein said further electronic control device (37) is also adapted to receive the temperature data detected by said at least one further second temperature sensor (34), and compare them with a predefined target temperature of the surface of the preform at the inlet of the further bench (30) to optimize the power of the heating elements (6') of the heating modules (4").

11. A blow molding plant for blow molding plastic material containers comprising in sequence
- a furnace (1) according to one of claims 7 to 10,
- and a blow molding or stretch-blow molding machine (3).

12. A process for heating plastic material preforms by means of a heating system (2) according to any one of claims 1 to 6, wherein the following steps are provided
- a detection of the temperature of the preform at said first heating zone (10) by means of said at least one first temperature sensor (8),
- and a detection of the temperature of the preform at said at least one second heating zone (11) by means of said at least one second temperature sensor (9), and wherein the temperature data detected by both said at least one first temperature sensor (8) and said at least one second temperature sensor (9) are received by the electronic control device (7) which compares them with predefined target temperatures of said first heating zone (10) and said second heating zone (11) to act in feedback by regulating the power of said at least one first heating element (12) and said at least one second heating element (13).

## Patentansprüche

1. Heizsystem (2) zum Erwärmen von Kunststoffvorformlingen stromaufwärts einer Blasform- oder Streckblasformmaschine (3), wobei das System ein Heizmodul (4) umfasst, das dazu ausgelegt ist, von einer Vielzahl von Vorformlingen (5) durchlaufen zu werden, die sich entlang einer Transportlinie (14) fortbewegen,
wobei das Heizmodul (4) mit einer Vielzahl von Heizelementen (12, 13) versehen ist, die entlang einer Ebene angeordnet sind, die im Wesentlichen parallel zu einer Ebene verläuft, die die Achsen der Vorformlinge enthält, die dazu ausgelegt sind, das Heizmodul zu durchlaufen,
wobei das Heizmodul (4) umfasst
eine erste Heizzone (10), die sich **in** der Nähe eines Stützbereichs des Halses der Vorformlinge befindet und mindestens ein erstes Heizelement (12) der Vielzahl von Heizelementen umfasst,
und mindestens eine zweite Heizzone (11), die benachbart zu der ersten Heizzone (10) und an einer Durchgangszone des röhrenförmigen Körpers der Vorformlinge angeordnet ist und mindestens ein zweites Heizelement (13) der Vielzahl von Heizelementen umfasst,
wobei das Heizsystem (2) ferner umfasst
mindestens einen ersten Temperatursensor (8), der außerhalb des Heizmoduls (4) und an der ersten Heizzone angeordnet ist,
und mindestens einen zweiten Temperatursensor (9), der außerhalb des Heizmoduls (4) und an der mindestens einen zweiten Heizzone angeordnet ist, wobei eine elektronische Steuervorrichtung (7) vorgesehen ist, die dazu ausgelegt ist, die sowohl von dem mindestens einen ersten Temperatursensor (8) als auch von dem mindestens einen zweiten Temperatursensor (9) erfassten Temperaturdaten zu empfangen, die Temperaturdaten mit vordefinierten Solltemperaturen der ersten Heizzone (10) und der mindestens einen zweiten Heizzone (11) zu vergleichen und durch Regeln der Leistung des mindestens einen ersten Heizelements (12) und des mindestens einen zweiten Heizelements (13) als Rückmeldung zu reagieren; wobei das Heizsystem **dadurch gekennzeichnet ist, dass** sowohl der mindestens eine erste Temperatursensor (8) als auch der mindestens eine zweite Temperatursensor (9) unmittelbar stromabwärts des Heizmoduls (4) angeordnet sind, so dass zwischen dem Auslassabschnitt des Heizmoduls (4) und den Temperatursensoren keine Komponenten vorgesehen sind, und die Sensoren (8, 9) der Außenseite des Heizmoduls (4) zugewandt sind, um zu vermeiden, dass die Messung an dem Vorformling während der Einwirkung der Strahlung der Heizelemente (12, 13) darauf vorgenommen wird.

2. System nach Anspruch 1, wobei ein erster Temperatursensor (8) für jedes erste Heizelement (12) und ein zweiter Temperatursensor (9) für jedes zweite Heizelement (13) vorgesehen sind.

3. System nach Anspruch 1, ferner umfassend
- mindestens eine dritte Heizzone (15), die benachbart zu der mindestens einen zweiten Heizzone (11) und an einer Durchgangszone des Bodens der Vorformlinge angeordnet ist und mindestens ein drittes Heizelement (16) der Vielzahl von Heizelementen umfasst;
- und mindestens einen dritten Temperatursensor (17), der außerhalb des Heizmoduls (4) und an der dritten Heizzone angeordnet ist, und wobei die elektronische Steuervorrichtung (7) dazu ausgelegt ist, auch die von dem mindestens einen dritten Temperatursensor (17) erfassten Temperaturdaten zu empfangen, diese mit mindestens einer vordefinierten Solltemperatur der dritten Heizzone (15) zu vergleichen und durch Regeln der Leistung des mindestens einen dritten Heizelements (16) als Rückmeldung zu reagieren.

4. System nach Anspruch 3, wobei ein erster Temperatursensor (8) für jedes erste Heizelement (12), ein zweiter Temperatursensor (9) für jedes zweite Heizelement (13) und ein dritter Temperatursensor (17) für jedes dritte Heizelement (16) vorgesehen sind.

5. System nach einem der vorhergehenden Ansprüche, wobei die Vielzahl von Heizelementen (12, 13) Infrarotlampen oder NIR-Lampen oder Laserlampen umfasst, die entlang einer Ebene angeordnet sind, die im Wesentlichen parallel zu der Ebene verläuft, die die Achsen der Vorformlinge enthält, die dazu ausgelegt sind, das Heizmodul zu durchlaufen.

6. System nach Anspruch 3, wobei der mindestens eine dritte Temperatursensor (17) unmittelbar stromabwärts des Heizmoduls (4) angeordnet ist und vorzugsweise der Außenseite des Heizmoduls (4) zugewandt ist.

7. Ofen (1) zum Erwärmen von Kunststoffvorformlingen, der dazu ausgelegt ist, stromaufwärts einer Blasform- oder Streckblasformmaschine (3) positioniert zu sein, wobei der Ofen (1) eine Vielzahl von Heizsystemen (2, 2') umfasst, die jeweils ein Heizmodul (4, 4') umfassen, das dazu ausgelegt ist, von der Vielzahl von Vorformlingen (5) durchlaufen zu werden und auf mindestens einer Bank angeordnet ist,
wobei jedes Heizmodul (4, 4') mit einer Vielzahl von jeweiligen Heizelementen (12, 13, 16) versehen ist, die entlang einer Ebene angeordnet sind, die im Wesentlichen parallel zu der Ebene verläuft, die die Achsen der Vorformlinge (5) enthält, die dazu ausgelegt sind, sich entlang der mindestens einen Bank (31) fortzubewegen,
wobei vorgesehen ist, dass mindestens ein Heizsystem (2) der Heizsysteme (2, 2') nach einem der vorhergehenden Ansprüche hergestellt ist,
und wobei die elektronische Steuervorrichtung (7) des mindestens einen Heizsystems (2) dazu ausgelegt ist, die sowohl von dem jeweiligen mindestens einen ersten Temperatursensor (8) als auch von dem jeweiligen mindestens einen zweiten Temperatursensor (9) erfassten Temperaturdaten zu empfangen, die Temperaturdaten mit vordefinierten Solltemperaturen der ersten Heizzone (10) und der zweiten Heizzone (11) der jeweiligen Heizmodule (4) zu vergleichen, und durch Regeln der Leistung des mindestens einen ersten Heizelements (12) und des mindestens einen zweiten Heizelements (13) des jeweiligen Heizmoduls (4) als Rückmeldung zu reagieren, und/oder durch Regeln der Leistung der Vielzahl von Heizelementen (6) von einem oder mehreren der weiteren Heizsysteme (2') des Ofens (1) als Rückmeldung zu reagieren, der stromaufwärts des mindestens einen Heizsystems (2) angeordnet ist, das nach einem der vorhergehenden Ansprüche hergestellt ist.

8. Ofen nach Anspruch 7, wobei die Vielzahl von Heizsystemen (2, 2'), die ein jeweiliges Heizmodul (4, 4') umfasst, **in** einer Bank (31) angeordnet ist;
wobei eine weitere Bank (30) vorgesehen ist, die stromaufwärts der Bank (31) angeordnet ist und mit einer Vielzahl von Heizsystemen (2") versehen ist, die ein jeweiliges Heizmodul (4") umfassen, und mittels einer Verbindungsstrecke (32) mit der Bank (31) verbunden ist;
wobei jedes Heizmodul (4") mit einer Vielzahl von Heizelementen (6') versehen ist, die entlang einer Ebene angeordnet sind, die im Wesentlichen parallel zu der Ebene verläuft, die die Achsen der Vorformlinge (5) enthält, die sich entlang der weiteren Bank (30) fortbewegen;
wobei mindestens ein weiterer erster Temperatursensor (33), vorzugsweise ein einzelner weiterer erster Temperatursensor (33), an der Verbindungsstrecke (32), vorzugsweise unmittelbar stromabwärts der weiteren Bank (30), angeordnet ist;
und wobei eine weitere elektronische Steuervorrichtung (37) dazu ausgelegt ist, die von dem mindestens einen weiteren ersten Temperatursensor (33) erfassten Temperaturdaten zu empfangen, die Temperaturdaten mit einer vordefinierten Solltemperatur der Oberfläche des Vorformlings an dem Auslass der weiteren Bank (30) zu vergleichen, und durch Regeln der Leistung der Heizelemente (6') von einem oder mehreren Heizmodulen (4") als Rückmeldung zu reagieren.

9. Ofen nach Anspruch 8, wobei die weitere elektronische Steuervorrichtung (37) dazu ausgelegt ist, mit der elektronischen Steuervorrichtung (7) zusammenzuwirken, indem sie Letzterer die von dem mindestens einen weiteren ersten Temperatursensor (33) erfassten Temperaturdaten sendet, so dass die elektronische Steuervorrichtung (7) die Leistung des mindestens einen ersten Heizelements (12) und des mindestens einen zweiten Heizelements (13) des jeweiligen Heizmoduls (4) und/oder die Leistung der Vielzahl von Heizelementen (6) eines oder mehrerer der weiteren Heizsysteme (2') der Bank (31) optimieren kann.

10. Ofen nach Anspruch 8 oder 9, wobei mindestens ein weiterer zweiter Temperatursensor (34), vorzugsweise ein einzelner weiterer zweiter Temperatursensor (34), der an dem Einlass der weiteren Bank (30) angeordnet ist, vorgesehen ist;
und wobei die weitere elektronische Steuervorrichtung (37) auch dazu ausgelegt ist, die von dem mindestens einen weiteren zweiten Temperatursensor (34) erfassten Temperaturdaten zu empfangen und sie mit einer vordefinierten Solltemperatur der Oberfläche des Vorformlings an dem Einlass der weiteren Bank (30) zu vergleichen, um die Leistung der Heizelemente (6') der Heizmodule (4") zu optimieren.

11. Blasformanlage zum Blasformen von Kunststoffbehältern, die nacheinander umfasst
- einen Ofen (1) nach einem der Ansprüche 7 bis 10,
- und eine Blasform- oder Streckblasformmaschine (3).

12. Verfahren zum Erwärmen von Kunststoffvorformlingen mittels eines Heizsystems (2) nach einem der Ansprüche 1 bis 6, wobei die folgenden Schritte vorgesehen sind
- eine Erfassung der Temperatur des Vorformlings an der ersten Heizzone (10) mittels des mindestens einen ersten Temperatursensors (8),
- und eine Erfassung der Temperatur des Vorformlings an der mindestens einen zweiten Heizzone (11) mittels des mindestens einen zweiten Temperatursensors (9), und wobei die sowohl von dem mindestens einen ersten Temperatursensor (8) als auch von dem mindestens einen zweiten Temperatursensor (9) erfassten Temperaturdaten von der elektronischen Steuervorrichtung (7) empfangen werden, die diese mit vordefinierten Solltemperaturen der ersten Heizzone (10) und der zweiten Heizzone (11) vergleicht, um durch Regeln der Leistung des mindestens einen ersten Heizelements (12) und des mindestens einen zweiten Heizelements (13) als Rückmeldung zu reagieren.

## Revendications

1. Système de chauffage (2) pour chauffer des préformes en matière plastique en amont d'une machine de moulage par soufflage ou par étirage avec soufflage (3), le système comprenant un module de chauffage (4) adapté pour être traversé par une pluralité de préformes (5) avançant le long d'une ligne de transport (14),
dans lequel le module de chauffage (4) est pourvu d'une pluralité d'éléments chauffants (12, 13) disposés le long d'un plan sensiblement parallèle à un plan contenant les axes des préformes adaptées pour traverser ledit module de chauffage,
dans lequel le module de chauffage (4) comprend
une première zone de chauffage (10), à proximité d'une zone de support du col des préformes, et comprenant au moins un premier élément chauffant (12) de ladite pluralité d'éléments chauffants,
et au moins une deuxième zone de chauffage (11), disposée adjacente à ladite première zone de chauffage (10) et au niveau d'une zone de passage du corps tubulaire des préformes, et comprenant au moins un deuxième élément chauffant (13) de ladite pluralité d'éléments chauffants,
dans lequel le système de chauffage (2) comprend en outre
au moins un premier capteur de température (8) disposé à l'extérieur du module de chauffage (4) et au niveau de ladite première zone de chauffage,
et au moins un deuxième capteur de température (9) disposé à l'extérieur du module de chauffage (4) et au niveau de ladite au moins une deuxième zone de chauffage, dans lequel un dispositif de commande électronique (7) est prévu, adapté pour recevoir les données de température détectées à la fois par ledit au moins un premier capteur de température (8) et ledit au moins un deuxième capteur de température (9), comparer lesdites données de température avec des températures cibles prédéfinies de ladite première zone de chauffage (10) et de ladite au moins une deuxième zone de chauffage (11), et agir en retour en régulant la puissance dudit au moins un premier élément chauffant (12) et dudit au moins un deuxième élément chauffant (13) ; le système de chauffage étant **caractérisé en ce que** ledit au moins un premier capteur de température (8) et ledit au moins un deuxième capteur de température (9) sont tous deux disposés immédiatement en aval du module de chauffage (4) de sorte qu'aucun composant n'est prévu entre la section de sortie du module de chauffage (4) et les capteurs de température, et les capteurs (8, 9) sont tournés vers l'extérieur dudit module de chauffage (4) pour éviter que la mesure ne soit prise sur la préforme pendant son exposition au rayonnement des éléments chauffants (12, 13).

2. Système selon la revendication 1, dans lequel un premier capteur de température (8) est prévu pour chaque premier élément chauffant (12) et un deuxième capteur de température (9) est prévu pour chaque deuxième élément chauffant (13).

3. Système selon la revendication 1, comprenant en outre
- au moins une troisième zone de chauffage (15), disposée adjacente à ladite au moins une deuxième zone de chauffage (11) et au niveau d'une zone de passage du fond des préformes, et comprenant au moins un troisième élément chauffant (16) de ladite pluralité d'éléments chauffants ;
- et au moins un troisième capteur de température (17) disposé à l'extérieur du module de chauffage (4) et au niveau de ladite troisième zone de chauffage, et dans lequel ledit dispositif de commande électronique (7) est adapté pour recevoir également les données de température détectées par ledit au moins un troisième capteur de température (17), les comparer avec au moins une température cible prédéfinie de ladite troisième zone de chauffage (15), et agir en retour en régulant la puissance dudit au moins un troisième élément chauffant (16).

4. Système selon la revendication 3, dans lequel un premier capteur de température (8) est prévu pour chaque premier élément chauffant (12), un deuxième capteur de température (9) est prévu pour chaque deuxième élément chauffant (13), et un troisième capteur de température (17) est prévu pour chaque troisième élément chauffant (16).

5. Système selon l'une quelconque des revendications précédentes, dans lequel ladite pluralité d'éléments chauffants (12, 13) comprend des lampes infrarouges ou des lampes NIR ou des lampes laser, disposées le long d'un plan sensiblement parallèle audit plan contenant les axes des préformes adaptées pour traverser ledit module de chauffage.

6. Système selon la revendication 3, dans lequel ledit au moins un troisième capteur de température (17) est disposé immédiatement en aval du module de chauffage (4), et de préférence face à l'extérieur dudit module de chauffage (4).

7. Four (1) pour chauffer des préformes en matière plastique, adapté pour être positionné en amont d'une machine de moulage par soufflage ou par étirage avec soufflage (3), le four (1) comprenant une pluralité de systèmes de chauffage (2, 2') comprenant un module de chauffage respectif (4, 4'), adapté pour être traversé par ladite pluralité de préformes (5), et disposé dans au moins un banc, dans lequel chaque module de chauffage (4, 4') est pourvu d'une pluralité d'éléments chauffants respectifs (12, 13, 16) disposés le long d'un plan sensiblement parallèle au plan contenant les axes des préformes (5) adaptés pour avancer le long de l'au moins un banc (31),
dans lequel il est prévu qu'au moins un système de chauffage (2) desdits systèmes de chauffage (2, 2') soit réalisé selon l'une quelconque des revendications précédentes,
et dans lequel le dispositif de commande électronique (7) dudit au moins un système de chauffage (2) est adapté pour recevoir les données de température détectées à la fois par le au moins un premier capteur de température respectif (8) et le au moins un deuxième capteur de température respectif (9), comparer lesdites données de température avec des températures cibles prédéfinies de ladite première zone de chauffage (10) et de ladite deuxième zone de chauffage (11) du module de chauffage respectif (4),
et agir en retour en régulant la puissance dudit au moins un premier élément chauffant (12) et dudit au moins un deuxième élément chauffant (13) dudit module de chauffage respectif (4) et/ou agir en retour en régulant la puissance de la pluralité d'éléments chauffants (6) d'un ou plusieurs des autres systèmes de chauffage (2') du four (1) disposés en amont dudit au moins un système de chauffage (2) réalisé selon l'une quelconque des revendications précédentes.

8. Four selon la revendication 7, dans lequel ladite pluralité de systèmes de chauffage (2, 2'), comprenant un module de chauffage respectif (4, 4'), est disposée dans un banc (31) ;
dans lequel un autre banc (30) est prévu, disposé en amont du banc (31) et pourvu d'une pluralité de systèmes de chauffage (2"), comprenant un module de chauffage respectif (4"), et relié au banc (31) au moyen d'un tronçon de liaison (32) ;
dans lequel chaque module de chauffage (4") est pourvu d'une pluralité d'éléments chauffants (6') disposés le long d'un plan sensiblement parallèle au plan contenant les axes des préformes (5) avançant le long dudit autre banc (30) ;
dans lequel au moins un autre premier capteur de température (33), de préférence un seul autre premier capteur de température (33), est disposé au niveau dudit tronçon de liaison (32), de préférence immédiatement en aval de l'autre banc (30) ;
et dans lequel un autre dispositif de commande électronique (37) est adapté pour recevoir les données de température détectées par ledit au moins un autre premier capteur de température (33), comparer lesdites données de température avec une température cible prédéfinie de la surface de la préforme à la sortie dudit autre banc (30), et agir en retour en régulant la puissance des éléments chauffants (6') d'un ou plusieurs des modules de chauffage (4").

9. Four selon la revendication 8, dans lequel ledit autre dispositif de commande électronique (37) est adapté pour coopérer avec le dispositif de commande électronique (7) en envoyant à ce dernier les données de température détectées par ledit au moins un autre premier capteur de température (33), de sorte que ledit dispositif de commande électronique (7) peut optimiser la puissance dudit au moins un premier élément chauffant (12) et dudit au moins un deuxième élément chauffant (13) dudit module de chauffage respectif (4) et/ou la puissance de la pluralité des éléments chauffants (6) d'un ou plusieurs des autres systèmes chauffants (2') du banc (31).

10. Four selon la revendication 8 ou 9, dans lequel au moins un autre deuxième capteur de température (34) est prévu, de préférence un seul autre deuxième capteur de température (34), disposé à l'entrée de l'autre banc (30) ; et dans lequel ledit autre dispositif de commande électronique (37) est également adapté pour recevoir les données de température détectées par ledit au moins un autre deuxième capteur de température (34), et les comparer avec une température cible prédéfinie de la surface de la préforme à l'entrée de l'autre banc (30) pour optimiser la puissance des éléments chauffants (6') des modules de chauffage (4").

11. Installation de moulage par soufflage pour mouler par soufflage des récipients en matière plastique comprenant en séquence
- un four (1) selon l'une des revendications 7 à 10,
- et une machine de moulage par soufflage ou par étirage avec soufflage (3).

12. Procédé de chauffage de préformes en matière plastique au moyen d'un système de chauffage (2) selon l'une quelconque des revendications 1 à 6, dans lequel les étapes suivantes sont prévues
- détection de la température de la préforme au niveau de ladite première zone de chauffage (10) au moyen dudit au moins un premier capteur de température (8),
- et détection de la température de la préforme au niveau de ladite au moins une deuxième zone de chauffage (11) au moyen dudit au moins un deuxième capteur de température (9), et dans lequel les données de température détectées à la fois par ledit au moins un premier capteur de température (8) et ledit au moins un deuxième capteur de température (9) sont reçues par le dispositif de commande électronique (7) qui les compare avec des températures cibles prédéfinies de ladite première zone de chauffage (10) et de ladite deuxième zone de chauffage (11) pour agir en retour en régulant la puissance dudit au moins un premier élément chauffant (12) et dudit au moins un deuxième élément chauffant (13).
